Europäisches Patentamt

European Patent Office

Office européen des brevets

(19)

(11) Veröffentlichungsnummer: **0 391 270 B1**

# (12) EUROPÄISCHE PATENTSCHRIFT

(45) Veröffentlichungstag der Patentschrift: **14.12.94**

(21) Anmeldenummer: **90106117.6**

(22) Anmeldetag: **30.03.90**

(51) Int. Cl.⁵: **F16L 55/162**, F16L 58/10, C08L 67/06, E03F 3/06

(54) **Verwendung von schwindungsarmen Systemen auf der Basis von ungesättigten Polyesterharzen bei der Sanierung von Rohrleitungen.**

(30) Priorität: **01.04.89 DE 3910607**

(43) Veröffentlichungstag der Anmeldung:
**10.10.90 Patentblatt 90/41**

(45) Bekanntmachung des Hinweises auf die
Patenterteilung:
**14.12.94 Patentblatt 94/50**

(84) Benannte Vertragsstaaten:
**AT BE CH DE DK ES FR GB GR IT LI LU NL SE**

(56) Entgegenhaltungen:
EP-A- 0 260 341       AT-B- 354 095
CH-A- 467 295        DE-A- 2 538 878
DE-A- 2 648 371      DE-A- 3 029 674
DE-A- 3 641 324      US-A- 4 724 178

(73) Patentinhaber: **HOECHST AKTIENGESELL-SCHAFT**

**D-65926 Frankfurt (DE)**

(72) Erfinder: **Siegberg, Reinhold**
**Am Wickenstück 12**
**D-6240 Königstein/Taunus (DE)**
Erfinder: **Schik, Jens-Peter, Dr.**
**Erich-Ollenhauer-Strasse 32a**
**D-6200 Wiesbaden (DE)**

**Beschreibung**

Zur Sanierung von Rohrleitungen, insbesondere von im Erdreich verlegten Abwasserleitungen, bedient man sich vielfach eines Verfahrens, das als "Schlauch-Relining" bekannt ist (DE-PS 3 513 956). Dabei wird ein mit einem härtbaren Kunstharz getränkter Schlauch in die Leitung eingezogen und mit einem wassergefüllten Hilfsschlauch an die Wand der Leitung gedrückt. Das Wasser im Hilfsschlauch wird erwärmt, damit die Härtung des Kunstharzes eingeleitet wird, und der Druck wird gehalten, bis das Kunstharz ausgehärtet ist. Danach wird der Hilfsschlauch herausgezogen.

Als härtbares Kunstharz wird bei diesem Verfahren in der Regel ein ungesättigtes Polyesterharz (UP-Harz) verwendet, weil UP-Harze relativ billig sind, in dem stark sauren Milieu kommunaler Abwässer beständig sind und als Mischung von Harz und Härter so eingestellt werden können, daß der damit getränkte Auskleidungsschlauch längere Zeit lagerfähig ist, ohne daß die Härtung des Kunstharzes einsetzt. Ein Nachteil der UP-Harze ist aber ihre verhältnismäßig hohe Schwindung beim Härten. Auch wenn, wie in der DE-PS 3 513 956 beschrieben, der Auskleidungsschlauch vor dem Einziehen in die Rohrleitung perforiert wird, so daß das UP-Harz hindurchtreten und Risse in der zu sanierenden Leitung ausfüllen kann, ergibt sich nämlich keine Verklebung zwischen dem Auskleidungsschlauch und der Innenwand der Leitung, weil im Regelfall die zu sanierende Leitung nicht sauber genug und vor allem nicht trocken ist. Nach dem Aushärten liegt daher die Auskleidung als faserverstärktes Kunstharzrohr mit Spiel in der sanierten Leitung und kann sich bewegen, was zu unerwünschten mechanischen Belastungen führt.

Gemäß der Erfindung wird diesem Nachteil durch die Verwendung von schrumpfungsarm härtbaren ungesättigten Polyesterharzsystemen zum Auskleiden von Rohrleitungen nach dem Schlauch-Relining-Verfahren durch Imprägnieren des in die Rohrleitung einzuziehenden Auskleidungsschlauches mit dem Polyesterharzsystem und Härten des harzgetränkten Auskleidungsschlauches unter Anpressen an die auszukleidende Rohrinnenwand unter einem Druck von 0,5 bis 2 bar und Erwärmen auf über 50 °C in Gegenwart von Initiatoren, die oberhalb von 50 °C unter Radikalbildung zerfallen, abgeholfen.

Die UP-Harzsysteme können Füllstoffe enthalten. Beim Auskleiden von Leitungen für kommunale Abwässer müssen diese Füllstoffe gegen verdünnte Schwefelsäure resistent sein. Als besonders geeignet hat sich $Al_2O_3 \cdot 3H_2O$ erwiesen, das auch die Viskosität des Kunstharzes nicht wesentlich erhöht.

Zur Ausführung des Schlauch-Relining-Verfahrens können Auskleidungsschläuche verwendet werden, die vor dem Transport zur Baustelle mit dem härtbaren Kunstharz imprägniert werden. Solche Schläuche bestehen aus einer Innenlage aus einem Material, das das Kunstharz in flüssiger Form aufnimmt und festhält, und einer für das Kunstharz undurchlässigen Außenlage. Die Innenlage besteht z.B. aus einem Polyesternadelfilz oder aus Glasfasermaterial.

Schwindungsarme UP-Harze sind prinzipiell bekannt (siehe z.B. AT-B-354 095). Sie werden im wesentlichen für die Herstellung von härtbaren Formmassen für hochwertige Formteile in der Elektro- und Automobilindustrie verwendet, die im Heißpreßverfahren unter hohem Druck verarbeitet werden. Es war überraschend, daS solche Systeme auch bei den relativ niedrigen Drucken von etwa 0,5 bis 2 bar, die beim Schlauch-Relining angewandt werden, keine oder nur eine sehr geringe Schwindung beim Aushärten zeigen.

Basis der erfindungsgemäß zu verwendenden Harz-Systeme sind UP-Harze, die aus ungesättigten mehrfunktionellen Carbonsäuren, insbesondere Mal ein- und/oder Fumarsäure, einem Anteil an gesättigten oder aromatischen Dicarbonsäuren, insbesondere Phthalsäure, iso-Phthalsäure, ortho-Phthalsäure, Terephthalsäure, Hexachloroendomethylentetrahydro-phthalsäure und Adipinsäure und Glykolen, z.B. Ethylenglykol, Propylenglykol, Butylenglykol, Diethylenglykol, Neopentylglykol oder Bisphenolhydroxyalkylethern bestehen und in Styrol oder Methylmethacrylat gelöst sind. Der Gehalt an Styrol oder Methylmethacrylat beträgt etwa 30-45 Gew.-%.

Durch Variation der Komponenten können UP-Harze verschiedenen Anforderungen angepaßt werden, wie allgemein bekannt ist.

Die zweite Komponente des Systems ist eine Lösung eines Thermoplasten in Styrol, wobei es erforderlich ist, daß der Thermoplast mit dem UP-Harz unverträglich ist. Geeignete Thermoplaste sind z.B. Polystyrol, Polyvinylacetat und Polyacrylate oder Polymethacrylate. Aus Kostengründen wird Polystyrol bevorzugt. Die Lösung enthält etwa 30-50 Gew.-% des Thermoplasten.

Die Mischungen aus UP-Harz und Thermoplastenlösung enthalten etwa 60-90 Gew.-Teile der UP-Harzlösung und etwa 40-10 Gew.-Teile der Lösung des Thermoplasten.

Zur Verbilligung kann man den UP-Harzsystemen aus den obengenannten Komponenten Füllstoffe zusetzen, die gegenüber dem in der zu sanierenden Leitung zu transportierenden Medium inert sind. Die Füllstoffe sollen bei den üblichen Zusätzen von 10-20 Gew.-% die Viskosität des Systems nicht spürbar erhöhen. Für die Auskleidung von Leitungen für kommunale Abwässer eignet sich z.B. $Al_2O_3 \cdot 3H_2O$

besonders gut, da es die beiden genannten Eigenschaften vereint.

Die Härtung der UP-Harzsysteme erfolgt durch Polymerisation. Als Initiatoren dienen bevorzugt organische Peroxide. Bei der Verwendung dieser Systeme beim Schlauch-Relining-Verfahren verstreicht zwischen dem Tränken der Schlauch-Innenlage und der Verarbeitung normalerweie eine längere Zeit. Man verwendet deshalb als Initiatoren Peroxide, die erst bei Temperaturen oberhalb etwa 50 °C unter Radikalbildung zerfallen und die Polymerisation starten. Besonders gute Ergebnisse werden erhalten, wenn die Polymerisation dann rasch einsetzt und abläuft. Initiatoren, die diese Bedingungen gut erfüllen sind z.B. tert.-Butylpernonoat, Bis-(4-tert.-butylcyclohexyl)-peroxydicarbonat, 1,1-Di-(tert.-butylperoxy)-trimethylcyclohexan und Dimyristyl-peroxydicarbonat.

**Beispiele**

Harz A

Polykondensat aus Maleinsäureanhydrid, Phthalsäureanhydrid und 1,2-Propylenglykol im molaren Verhältnis 2:1:3,2, gelöst in 1,35 Mol Styrol pro Mol C = C

Harz B

Polykondensat aus Maleinsäureanhydrid, iso-Phthalsäure und Neopentylglykol im molaren Verhältnis von 1:1:2, gelöst in 3 Mol Styrol pro Mol C = C

Härter I

Mischung aus 2 Gew.-Teilen tert.-Butylpernonanoat und 1-2 Gew.-Teilen Bis-(4-tert.-butylcyclohexyl)-peroxydicarbonat

Härter II

Mischung aus 1-2 Gew.-Teilen 1,1-Di-(tert.-butylperoxy)-trimethylcyclohexan und 0,5-1 Gew.-Teilen Dimyristylperoxydicarbonat

Thermoplastlösung a

30 Gew.-Teile Polystyrol in 70 Gew.-Teilen Styrol

Thermoplastlösung b

40 Gew.-Teile Polyvinylacetat in 60 Gew.-Teilen Styrol

EP 0 391 270 B1

Füllstoff F Al$_2$O$_3 \cdot$ 3H$_2$O

| Beispiel | A-GT | B-GT | I-GT | II-GT | a-GT | b-GT | F-GT |
|---|---|---|---|---|---|---|---|
| Vergl. 1a | 100 | – | | | – | – | 20 |
| Vergl. 5a | – | 100 | | | – | – | 20 |
| 1 | 70 | – | | | 30 | – | – |
| 2 | 70 | – | | | – | 30 | – |
| 3 | 70 | – | | | 30 | – | 20 |
| 4 | 70 | – | | | – | 30 | 20 |
| 5 | – | 70 | | | 30 | – | – |
| 6 | – | 70 | | | – | 30 | – |
| 7 | – | 70 | | | 30 | – | 20 |
| 8 | – | 70 | | | – | 30 | 20 |

Mit den Mischungen wurden die Innenlagen von Auskleidungsschläuchen getränkt und die Schläuche nach perforieren der Außenlage in Betonrohre mit einer lichten Weite von 250 mm eingezogen. Der Außendurchmesser der Schläuche betrug 250 mm. In die Auskleidungsschläuche wurde jeweils ein Hilfsschlauch unter 1,0 bar Wasserdruck eingestülpt, das Wasser wurde unter Aufrechterhaltung des Drucks auf 80 °C erwärmt und Temperatur und Druck 6-7 Stunden gehalten. Bei den Vergleichsversuchen 1a und 5a waren die Polyesterrohre um 6 mm im Durchmesser geschwunden, so daß sie von Hand aus dem Betonrohr herausgezogen werden konnten. Bei den erfindungsgemäßen Beispielen 1 bis 8 betrug die Schwindung höchstens ca. 1,5 mm. Die Polyesterrohre konnten nicht aus den Betonrohren gezogen werden.

**Patentansprüche**

1. Verwendung von schrumpfungsarm härtbaren ungesättigten Polyesterharzsystemen zum Auskleiden von Rohrleitungen nach dem Schlauch-Relining-Verfahren durch Imprägnieren des in die Rohrleitung einzuziehenden Auskleidungsschlauches mit dem Polyesterharzsystem und Härten des harzgetränkten Auskleidungsschlauches unter Anpressen an die auszukleidende Rohrinnenwand unter einem Druck von 0,5 bis 2 bar und Erwärmen auf über 50 °C in Gegenwart von Peroxide als Initiatoren, die oberhalb von 50 °C unter Radikalbildung zerfallen.

2. Verwendung nach Anspruch 1, dadurch gekennzeichnet, daß härtbare Polyesterharzsysteme verwendet werden, die im wesentlichen aus Mischungen aus einem in Styrol gelösten ungesättigten Polyesterharz und einem in Styrol gelösten mit dem ungesättigten Polyesterharz unverträglichen Thermoplasten bestehen.

3. Verwendung nach Anspruch 1 oder 2, dadurch gekennzeichnet, daß die Polyesterharzsysteme Thermoplasten aus der Gruppe Polystyrol, Polyvinylacetat, Polyacrylate, Polymethacrylate enthalten.

4. Verwendung nach einem oder mehreren der Ansprüche 1 bis 3, dadurch gekennzeichnet, daß das Polyesterharzsystem einen gegen verdünnte Schwefelsäure resistenten Füllstoff enthält.

5. Verwendung nach Anspruch 4, dadurch gekennzeichnet, daß das Polyesterharzsystem als Füllstoff Al$_2$O$_3 \cdot$ 3H$_2$O enthält.

6. Verwendung nach einem oder mehreren der Ansprüche 1 bis 5, dadurch gekennzeichnet, daß das Polyesterharzsystem als Imprägnierungsmittel der aus einem Polyesternadelfilz oder Glasfasermaterial bestehenden Innenlage des Auskleidungsschlauches eingesetzt wird.

4

## Claims

1. Use of low-shrinkage curable unsaturated polyester resin systems for lining pipelines by the tube relining process by impregnating the lining tube to be drawn into the pipeline with the polyester resin system and curing the resin-impregnated lining tube while pressing it against the internal wall of the pipe to be lined under a pressure of 0.5 to 2 bar and heating to above 50°C in the presence of peroxides, which dissociate above 50°C to form free radicals, as initiators.

2. Use according to Claim 1, characterized in that curable polyester resin systems which essentially comprise mixtures of an unsaturated polyester resin dissolved in styrene and a thermoplastic which is dissolved in styrene and is incompatible with the unsaturated polyester resin are used.

3. Use according to Claim 1 or 2, characterized in that the polyester resin systems comprise thermoplastics from the group consisting of polystyrene, polyvinyl acetate, polyacrylates and polymethacrylates.

4. Use according to one or more of Claims 1 to 3, characterized in that the polyester resin system comprises a filler which is resistant to dilute sulphuric acid.

5. Use according to Claim 4, characterized in that the polyester resin system comprises $Al_2O_3 \cdot 3H_2O$ as the filler.

6. Use according to one or more of Claims 1 to 5, characterized in that the polyester resin system is employed as the impregnating agent of the lining tube inner layer comprising a polyester needle felt or glass fibre material.

## Revendications

1. Utilisation de systèmes de résines polyesters insaturées durcissables avec un faible retrait pour le revêtement de canalisations par le procédé de Schlauch-Relining par imprégnation de la gaine de revêtement à introduire dans la canalisation avec le système de résine polyester et durcissement de la gaine de revêtement imprégnée de résine avec pressage contre la paroi interne du tuyau à revêtir sous une pression de 0,5 à 2 bars et un chauffage à plus de 50 °C en présence, comme initiateurs, de peroxydes qui se décomposent au-dessus de 50 °C avec formation de radicaux.

2. Utilisation selon la revendication 1, caractérisée en ce qu'on utilise des systèmes de résines polyesters durcissables qui se composent essentiellement de mélanges d'une résine polyester insaturée dissoute dans du styrène et d'une matière thermoplastique dissoute dans du styrène, incompatible avec la résine polyester insaturée.

3. Utilisation selon les revendications 1 ou 2, caractérisée en ce que les systèmes de résines polyesters contiennent des matières thermoplastiques choisies parmi le polystyrène, l'acétate de polyvinyle, les polyacrylates, les polyméthacrylates.

4. Utilisation selon une ou plusieurs des revendications 1 à 3, caractérisée en ce que le système de résine polyester contient une charge résistante à l'acide sulfurique dilué.

5. Utilisation selon la revendication 4, caractérisée en ce que le système de résine polyester contient comme charge $Al_2O_3 . 3H_2O$.

6. Utilisation selon une ou plusieurs des revendications 1 à 5, caractérisée en ce que le système de résine polyester est utilisé comme agent d'imprégnation de la couche interne de la gaine de revêtement constitué d'un feutre de polyester aiguilleté ou d'une matière à base de fibre de verre.